# EUROPÄISCHE PATENTSCHRIFT

(11) **EP 1 685 016 B1**
(45) Veröffentlichungstag und Bekanntmachung des Hinweises auf die Patenterteilung: **06.02.2008**
(21) Anmeldenummer: 04786827.8
(22) Anmeldetag: 22.09.2004
(51) Int. Cl.: B62B 5/04

(54) **TRANSPORTWAGEN MIT DIEBSTAHLSICHERUNG**
TRANSPORT CAR WITH ANTI-THEFT PROTECTION
CHARIOT DE TRANSPORT AVEC ANTIVOL

(30) Priorität: 22.09.2003 DE 20314705 U
(43) Veröffentlichungstag der Anmeldung: 02.08.2006
(73) Patentinhaber: systec POS-Technology GmbH, 82178 Puchheim (DE)
(72) Erfinder: WIETH, Franz, 82178 Puchheim (DE); SONNENDORFER, Horst, 82178 Puchheim (DE)
(86) Internationale Anmeldenummer: PCT/DE2004/002110
(87) Internationale Veröffentlichungsnummer: WO 2005/028278

(56) Entgegenhaltungen:
- GB-A- 2 327 916
- GB-A- 2 398 235
- US-A- 4 591 175
- US-A- 5 899 469
- US-A- 6 054 923
- US-B1- 6 502 669

## Beschreibung

### Technisches Gebiet

Die Erfindung betrifft einen Transportwagen mit lenkbaren Rollen. Die Rollen sind an zwei Achsen des Einkaufswagens montiert, um eine kippsichere Fortbewegung des Einkaufswagens zu gewährleisten. Die Rollen sind an der Vorderachse um eine senkrecht zur Fahrtrichtung stehende Lenkachse drehbar. An der Hinterachse sind die Rollen entweder ebenso wie die Rollen der Vorderachse um eine Lenkachse schwenkbar oder die Rollen sind nicht lenkbar. Die nicht lenkbaren Rollen der Hinterachse nennt man in Fachkreisen "Bockrollen".

Transportwagen mit lenkbaren Rollen an der Vorder- und Hinterachse sind leichter zu manövrieren. In Europa kommen hauptsächlich solche Transportwagen zum Einsatz, in den USA hauptsächlich Transportwagen mit Bockrollen.

Derartige Transportwägen werden von Einkaufsmärkten den Kunden für den Warentransport innerhalb des Marktes und gegebenfalls auch auf einem zugehörigen Parkplatz zur Verfügung gestellt.

### Stand der Technik

Um zu verhindern, dass ein Transportwagen ausserhalb des zulässigen Bereichs bewegt wird, sind eine Vielzahl von Vorrichtungen bekannt, die das Schieben des Transportwagens verhindern oder zumindest sehr erschweren.

Ein Teil der bekannten Lösungen sieht vor, mindestens eine Rolle zu blockieren. Diese Lösungen sind gleichermaßen einsetzbar unabhängig davon, welche Art von Hinterachse verwendet wird. Nachteilig bei dieser Lösung ist, dass die Rollen an einer Stelle stark abgenützt werden und anschließend nicht mehr rund laufen.

Eine eine andere Lösung sieht vor, bei einem Rad der Vorderachse die Lenkachse in einer schrägen Position zu fixieren, um nur noch eine Kreisfahrt mit dem Einkaufswagen zu ermöglichen. Dies verhindert zwar die einseitige Abnutzung ist jedoch nur wirkungsvoll bei Transportrollen mit feststehenden Rollen an der Hinterachse, den sogenannten Bockrollen.

Ein weiterer Transportwagen ist aus GB 2327916 (beinhaltet alle Merkmale des Oberbegriffs des Anspruchs 1) bekannt, der zwei oder mehrere Rollen bei Verlassen des zulässigen Bereichs in der Lenkposition sperrt. **Offenbarung der Erfindung**

### Technische Aufgabe

Es ist Aufgabe der Erfindung, eine Diebstahssicherung für Transportwagen zu schaffen, bei der die Nachteile des Standes der Technik vermieden werden und insbesonders bei Transportwagen mit lenkbaren Rollen an der Vorder- und Hinterachse ein wirksamer Diebstahlschutz ohne Abnutzung der Rollen stattfindet.

### Technische Lösung

Diese Aufgabe wird gelöst durch die kennzeichnenden Merkmale des Anspruchs 1.

Die Überlegungen, die zum Entstehen der vorliegenden Erfindung führten, machten sich in erfinderischer Weise zu Nutze, dass aus einer lenkbaren Rolle an der Hinterachse eine sogenannte "Bockrolle" wird, wenn man deren Lenkachse blockiert.

Weitergehende Überlegungen führten zu der Erkenntnis, dass die Weiterfahrt eines Transportwagens immer dann wirksam erschwert wird, wenn der Lenkwinkel von zwei Rollen fixiert wird und die Lenkwinkel der fixierten Rollen zueinander unterschiedlich sind. Hierbei ist es unerheblich, ob die blockierten Rollen an der gleichen oder an unterschiedlichen Achsen sind.

Sobald die Lenkwinkel blockiert sind, ist nur noch eine Kreisfahrt möglich. Der Radius der noch möglichen Kreisfahrt ist abhängig von der Differenz der Lenkwinkel der Rollen und ist am geringsten, wenn die Lenkwinkel zueinander im Winkel von 90 Grad stehen.

### Vorteilhafte Wirkungen

Die Rollen bleiben auch bei aktiviertem Diebstahlschutz rollfähig, wodurch vorteilhaft keine Abnutzung durch das Weiterschleifen der blockierten Rolle entstehen kann.

Die Räder werden automatisch in eine, dem Blockadewinkel entsprechende Lenkposition gebracht, um beispielweise eine Geradeaus- Fahrt bei aktivertem Diebstahlschutz zu verhindern.

### Kurze Beschreibung der Zeichnungen

Nachfolgend ist die Erfindung anhand eines Ausführungsbeispiels näher erläutert.

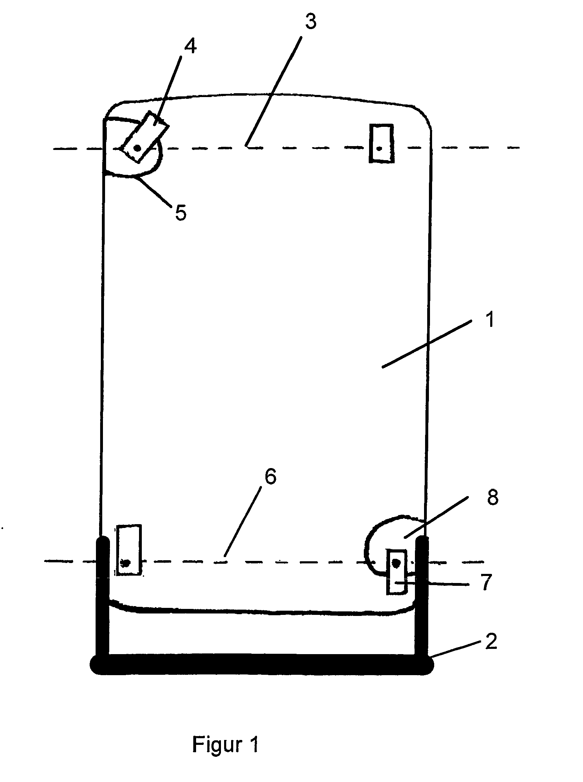

Die Figur zeigt in schematisierter Darstellung einen Einkaufswagen 1 in Draufsicht.

### Ausführungsform(en) der Erfindung

Der Benutzer schiebt, zieht oder lenkt den Transportwagen 1 mittels des Handgriffs 2. An der Vorderachse 3 ist die linke Rolle 4 mit einer erfindungsgemäßen Sperre 5 für den Lenkwinkel ausgestattet. Die Sperre 5 ist aktiviert und blockiert den Lenkwinkel bei ca. 45 Grad, bezogen auf die gedachte Längsachse des Transportwagens

Die Aktivierung kann auf verschiedene, an sich schon bekannte Methoden geschehen, beispielsweise durch Überfahren einer magnetischen Schwelle, einer Funkbarriere oder nach Erreichen einer maximal zulässigen Fahrstrecke.

An der Hinterachse 6 ist die rechte Rolle 7 mit einer Sperre 8 ausgestattet. Die Sperre 8 ist ebenfalls blockiert und fixiert den Lenkwinkel bei 0 Grad bezogen auf die Längsachse des Transportwagens.

Bei der Vorderachse 3 und der Hinterachse 6 handelt es sich nicht um durchgehende feste Achsen, vielmehr soll hierdurch nur zum Ausdruck gebracht werden, dass die für sich einzeln lenkbaren Rollen an der Vorder- und Rückseite des Transportwagens angebracht sind.

Für das zu erreichende Ziel, die Bewegung des Transportwagens zu behindern ist es prinzipiell unerheblich, welche Rollen fixiert werden. Die gezeigte diagonale Anordnung hat den Vorteil, dass ein einseitiges Kippen oder Anheben des Transportwagens in der Absicht, diesen dann auf zwei Rollen weiterzubewegen keine Vorteile bringt, da stets eine der fixierten Rollen noch zum Schieben benutzt werden muß.

Die Ausgestaltung der Fixierung sieht vor, dass bei Aktivierung des Diebstahlschutzes ein federbelasteter Bolzen sofort in eine Ausnehmung an der Rolle einrastet, sobald der Lenkwinkel dem vorgesehenen Blockadewinkel entspricht.

Es ist auch möglich, dass bei aktiviertem Diebstahlschutz die Rolle automatisch in die, dem Blockadewinkel entsprechende Lenkposition gebracht wird, damit die Blockade möglichst schnell aktiviert ist.

Dies ist möglich, wenn nach Aktivierung des Diebstahlschutzes eine Kraft entsteht, welche die Drehung des Rades in die Schrägstellung gemäß Blockierwinkel bringt.

Die vorgenommene Wahl, die Rolle an der Vorderachse in einem schrägen Winkel und die Rolle an der Hinterachse in etwa parallel zur Längsachse des Transportwagens zu fixieren hat den Vorteil, dass diese Rollenstellung beim Schieben des Transportwagens relativ häufig auftritt und dann die Fixierung der Rollen schnell stattfinden kann, nachdem der zulässige Bereich verlassen wurde.

Die hinteren Rollen nehmen diese Position beim geradeaus Schieben ein und die vorderen Rollen nehmen eine schräge Position bei jeder Kurvenfahrt ein.

Hierdurch ist vorteilhaft erreicht, dass die komplette Diebstahlssicherung aktiviert ist, sobald der erste Wechsel von Kurven- zur Geradeausfahrt stattfindet.

Bei der Ausführung mit einem automatischen Schwenken der vorderen Lenkrolle in die Blockadeposition ist oftmals auch keine Kurvenfahrt nötig, damit die Blockade erreicht wird.

### Gewerbliche Anwendbarkeit

Neben dem genannten Einsatz bei Transportwagen in Einkaufsmärkten ist die beschriebene Erfindung überall dort einsetzbar, wo die Verwendung von gelenkten, mit Rollen ausgestatteten Transportwagen, Rollstühlen, Karren oder ähnlichem ausserhalb eines zulässigen Bereichs verhindert werden soll. Es ist auch möglich die Erfindung bei derartigen Gefährten mit 2 oder 3 Rädern/Rollen einzusetzen. Gemeinsames Kriterium ist hier nur, dass die Lenkwinkel im blockierten Zustand unterschiedlich zueinander sind.

## Patentansprüche

1. Transportwagen mit Rollen, die allesamt lenkbar sind und bei dem ein Diebstahlschutz automatisch aktivierbar ist, sobald sich der Transportwagen außerhalb eines zulässigen Bereiches befindet und bei welchem bei aktiviertem Diebstahlschutz zwei oder mehrere Rollen (4, 7) in einer, einem Blockadewinkel entsprechenden Lenkposition fixierbar sind
**dadurch gekennzeichnet, dass**
bei aktiviertem Diebstahlschutz die Rolle automatisch in die, dem Blockadewinkel entsprechende Lenkposition gebracht wird.

2. Transportwagen nach Anspruch 1
**dadurch gekennzeichnet, dass**
nach Aktivierung des Diebstahlschutzes eine Kraft entsteht, welche die Drehung des Rades in die Schrägstellung gemäß Blockierwinkel bringt.

3. Transportwagen nach Anspruch 1 oder 2
**dadurch gekennzeichnet, dass**
bei Aktivierung des Diebstahlschutzes ein federbelasteter Bolzen sofort in eine Ausnehmung an der Rolle einrastet, sobald der Lenkwinkel dem vorgesehenen Blockadewinkel entspricht.

## Claims

1. Trolley with rollers which are all steerable, the trolley having a theftproofing safeguard which can be activated automatically as soon as the trolley is located outside an admissible area and, when the theftproofing safeguard is activated, it being possible for two or more rollers (4, 7) to be fixed in a steering position corresponding to a blocking angle, **characterized in that**, when the theftproofing safeguard is activated, the roller is moved automatically into the steering position corresponding to the blocking angle.

2. Trolley according to Claim 1, **characterized in that**, following activation of the theftproofing safeguard, a force occurs which causes the wheel to rotate into the oblique position of the blocking angle.

3. Trolley according to Claim 1 or 2, **characterized in that**, upon activation of the theftproofing safeguard, a spring-loaded bolt latches immediately into a recess on the roller as soon as the steering angle corresponds to the envisaged blocking angle.

## Revendications

1. Chariot de transport avec des roulettes, qui peuvent toutes être dirigées, lequel présente un antivol pouvant être activé automatiquement dès que le chariot de transport se trouve en dehors d'une zone autorisée et dans lequel, lorsque l'antivol est activé, au moins deux roulettes (4, 7) peuvent être fixées dans une position de direction correspondant à un angle de blocage,
**caractérisé en ce que**
lorsque l'antivol est activé, les roulettes sont amenées automatiquement dans la position de direction correspondant à l'angle de blocage.

2. Chariot de transport selon la revendication 1,
**caractérisé en ce que**,
après l'activation de l'antivol, il se produit une force qui provoque la rotation de la roue dans la position oblique conformément à l'angle de blocage.

3. Chariot de transport selon la revendication 1 ou 2,
**caractérisé en ce que**
lors de l'activation de l'antivol, un goujon sollicité par ressort s'encliquète immédiatement dans un évidement sur la roulette, dès que l'angle de direction correspond à l'angle de blocage prévu.
